# EUROPÄISCHE PATENTSCHRIFT

(11) **EP 1 248 897 B1**
(45) Veröffentlichungstag und Bekanntmachung des Hinweises auf die Patenterteilung: **03.08.2005**
(21) Anmeldenummer: 01903595.5
(22) Anmeldetag: 05.01.2001
(51) Int. Cl.: F01K 23/06, F02C 7/232

(54) **GAS- UND DAMPFTURBINENANLAGE**
GAS AND STEAM TURBINE INSTALLATION
DISPOSITIF DE TURBINE A GAZ ET A VAPEUR

(30) Priorität: 19.01.2000 DE 10002084
(43) Veröffentlichungstag der Anmeldung: 16.10.2002
(73) Patentinhaber: SIEMENS AKTIENGESELLSCHAFT, 80333 München (DE)
(72) Erfinder: SCHIFFERS, Ulrich, 90542 Eckental (DE); HANNEMANN, Frank, 91054 Buckenhof (DE); GREWE, Claus, 45359 Essen (DE)
(86) Internationale Anmeldenummer: PCT/DE2001/000024
(87) Internationale Veröffentlichungsnummer: WO 2001/053660

(56) Entgegenhaltungen:
- EP-A- 0 915 240
- DE-A- 3 916 477
- DE-C- 19 832 294
- US-A- 5 129 222
- HUTH M ET AL: "VERBRENNUNG VON SYNTHESEGAS IN GASTURBINEN" BWK BRENNSTOFF WARME KRAFT,DE,VDI VERLAG GMBH. DUSSELDORF, Bd. 50, Nr. 9, 1. September 1998 (1998-09-01), Seiten 35-39, XP000777542 ISSN: 0006-9612

## Beschreibung

Die Erfindung betrifft eine Gas- und Dampfturbinenanlage mit einem einer Gasturbine rauchgasseitig nachgeschalteten Abhitzedampferzeuger, dessen Heizflächen in den Wasser-Dampf-Kreislauf einer Dampfturbine geschaltet sind, und mit einem der Brennkammer der Gasturbine vorgeschalteten Brennstoffsystem, das eine Vergasungseinrichtung für fossilen Brennstoff und eine von der Vergasungseinrichtung abzweigende und in die Brennkammer der Gasturbine mündende Gasleitung aufweist. Die für eine Gasreinigung vorgesehenen Komponenten sind dabei üblicherweise in die Gasleitung geschaltet.

Eine derartige Anlage ist beispielsweise aus der GB-A 2 234 984 oder DE 198 32 294 C1 bekannt.

Zur Reduktion des Schadstoffausstoßes bei der Verbrennung des vergasten fossilen Brennstoffs oder Synthesegases kann in die Gasleitung ein Sättiger geschaltet sein, in dem das Synthesegas beim Betrieb der Anlage mit Wasserdampf beladen wird. Dazu durchströmt das Synthesegas den Sättiger im Gegenstrom zu einem Wasserstrom, der in einem als Sättigerkreislauf bezeichneten Wasserkreislauf geführt ist. Für einen besonders hohen Wirkungsgrad ist dabei eine Einkopplung von Wärme aus dem Wasser-Dampf-Kreislauf in den Sättigerkreislauf vorgesehen.

Durch den Kontakt mit dem im Sättigerkreislauf geführten aufgeheizten Wasserstrom im Sättiger wird der vergaste Brennstoff mit Wasserdampf aufgesättigt und erfährt in begrenztem Umfang eine Aufheizung. Aus wärmetechnischen und auch aus betrieblichen Gründen kann dabei eine weitere Aufheizung des Brennstoffs mittels eines Wärmetauschers vor dessen Zuführung in die Brennkammer der Gasturbine erforderlich sein.

Um einen besonders sicheren Betrieb der Gas- und Dampfturbinenanlage zu gewährleisten, sollte jederzeit eine Zufuhr des Synthesegases in die Brennkammer der Gasturbine gestoppt werden können. Hierzu ist üblicherweise vor der Brennkammer in die Gasleitung eine Schnellschlussarmatur geschaltet. Die Schnellschlussarmatur sperrt bei Bedarf in besonders kurzer Zeit die Gasleitung, so dass kein Synthesegas in die der Gasturbine zugeordnete Brennkammer gelangen kann.

Das Brennstoffsystem umfasst aufgrund der einschlägigen sicherheitstechnischen Vorschriften üblicherweise ein Gasschloss. Ein Gasschloss umfasst zwei Armaturen, beispielsweise Kugelhähne, die für einen Gasdurchfluß zu öffnen oder zu schließen sind. Zwischen diesen beiden Armaturen ist eine Zwischenentlastung oder eine Druckleitung angeschlossen. Die Zwischenentlastung kann an eine Fackel angeschlossen sein, über die überschüssiges Gas abgefackelt werden kann. Alternativ zu der Zwischenentlastung kann die Druckleitung angeschlossen werden, die dafür sorgt, dass kein Gas über die Gasschlossarmaturen einströmen kann. Das Gasschloss trennt also das Brennstoffsystem gasdicht in einen ersten Bereich oder das Vergasungssystem stromauf des Gasschlosses und in einen zweiten Bereich oder das sogenannte Gasturbinen-Brennstoffsystem stromab des Gasschlosses. Ein derartiges Gasschloss ist beispielsweise aus der Huth, M. et al: "Verbrennung von Synthesegas in Gasturbinen"; BWK Brennstoff Wärme Kraft, DE, VDI Verlag GmbH, Düsseldorf, Bd. 50, Nr. 9, 01.09.1998, S. 35-39, XP 000777542 ISSN: 0006-9612 bekannt.

Eine Gas- und Dampfturbinenanlage mit Vergasungseinrichtung kann sowohl mit dem Synthesegas, das beispielsweise aus Kohle oder Rückstandsöl erzeugt wird, als auch mit einem Zweitbrennstoff, wie z.B. Erdgas, betrieben werden. Bei einem Wechsel von Synthesegas auf Zweitbrennstoff oder umgekehrt ist es aus sicherheitstechnischen Gründen erforderlich, den Bereich zwischen dem Gasschloss und der Brennkammer, d.h. das Gasturbinen-Brennstoffsystem, mit einem Inertmedium wie Stickstoff oder Dampf zu spülen. Aufgrund des großen Volumens des zu spülenden Bereichs, der gegebenenfalls auch den Wärmetauscher umfasst, ist hierbei sowohl eine Spülung dieses Bereichs in Vorwärts- als auch in Rückwärtsrichtung erforderlich, um eine fast vollständige Verdrängung des Synthesegases oder des Zweitbrennstoffs sowie gegebenenfalls von eingedrungenem Rauchgas aus dem Gasturbinen-Brennstoffsystem zu erreichen. Eine Spülung mit Rein-Stickstoff erweist sich jedoch aufgrund der Größe des zu spülenden Volumens als unwirtschaftlich. Eine Spülung mit Dampf setzt wiederum die Bereitstellung von Dampf voraus, wodurch der Spülvorgang in der Regel abhängig vom Betrieb des Abhitzedampferzeugers der Dampfturbinenanlage ist. Außerdem ist hierbei entweder eine Abkühlung des dem Abhitzedampferzeuger entnommenen Dampfs oder ein Schutz der Komponenten vor besonders hohen Temperaturen des Dampfs erforderlich, wodurch die Vorbereitung des Spülvorgangs mit einem hohen Aufwand verbunden ist. Des weiteren sind aufwendige Entwässerungssysteme notwendig und die mit Dampf beaufschlagten Systeme sind gegen Korrosion zu schützen.

Das Spülkonzept, das eine Vorwärts- und eine Rückwärtsspülung umfasst, führt zu einem komplexen Regelungskonzept bei der Spülung und zu besonders aufwendigen Fahrweisen für den Betrieb der Anlage. Ein derartiges Spülkonzept führt außerdem zu relativ langen An- und Abfahrzeiten der Anlage.

Der Erfindung liegt die Aufgabe zugrunde, eine Gas- und Dampfturbinenanlage der obengenannten Art anzugeben, bei der bei einem Wechsel des der Brennkammer der Gasturbine zuzuführenden Gases das Brennstoffsystem in besonders einfacher Weise gespült werden kann. Außerdem soll ein Verfahren angegeben werden, welches in besonders kurzer Zeit und in besonders einfacher Weise eine Spülung des Brennstoffsystems der Gas- und Dampfturbinenanlage erlaubt.

Die auf die Gas- und Dampfturbinenanlage gerichtete Aufgabe wird erfindungsgemäß durch die Merkmale des Anspruchs 1 gelöst. In die Gasleitung ist ein Gasschloss geschaltet, wobei das Gasschloss stromauf der Brennkammer angeordnet ist, und ein Gas schlossarmatur umfasst, wobei stromab der Gasschlossarmatur eine Spülleitung zur dampffreien Spülung in die Gasleitung mündet.

Die Erfindung geht dabei von der Überlegung aus, dass bei einem Wechsel des der Brennkammer der Gasturbine zuzuführenden Gases eine Verdrängung des Synthesegases oder des Zweitbrennstoffes sowie gegebenenfalls Rauchgas aus dem Brennstoffsystem in besonders zuverlässiger Weise dann gewährleistet ist, wenn das zu spülende Volumen gering ist. Bei einem geringen zu spülenden Volumen erweist sich außerdem eine Spülung in lediglich einer Richtung als ausreichend, wodurch komplexe Regelmechanismen des Spülvorgangs entfallen können. Die Spülung erfolgt dabei nur in Vorwärtsrichtung, d..h. in die Brennkammer der Gasturbine. Der Spülvorgang kann nun alternativ mit Rein-Stickstoff, durchgeführt werden. Eine Spülung mit Stickstoff ist aufgrund des geringen zu spülenden Volumens wirtschaftlich. Weiter muss dabei der Dampfturbinenanlage kein Dampf für den Spülvorgang entzogen werden, wodurch der Gesamtwirkungsgrad der Gas- und Dampfturbinenanlage besonders hoch ausfällt. Zusätzlich entfällt die Verwendung hochlegierter Stähle, da keine oder nur geringfügige Korrosionserscheinungen auftreten können.

Ein geringes zu spülendes Volumen kann durch eine kompakte Anordnung der Komponenten erreicht werden. Ordnet man das Gasschloss und die Schnellschlussarmatur nebeneinander an, so kann die Schnellschlussarmatur die Funktion einer der im Gasschloss vorgesehenen Armaturen übernehmen, wodurch diese Armatur entfallen kann und das zu spülende Volumen des Gasturbinen-Brennstoffsystems besonders klein ausfällt.

Als Armaturen für das Gasschloss werden üblicherweise Kugelhähne oder Kugelventile eingesetzt, die eine hohe Gasdichtigkeit aufweisen. Die Schnellschlussarmatur ist üblicherweise als eine Schnellschlussklappe ausgeführt. Abhängig von der Baugröße der Armatur ist hierfür aber jede andere schnell schließende Armatur, wie z.B. ein geeignetes Ventil, einsetzbar.

In einer vorteilhaften Ausgestaltung der Erfindung ist ein gegebenenfalls in die Gasleitung geschalteter Wärmetauscher stromauf des Gasschlosses geschaltet. Auch hierdurch verringert sich das zu spülende Volumen im Gasturbinen-Brennstoffsystem. Der Wärmetauscher kann beispielsweise primärseitig in die Gasleitung zwischen der Vergasungseinrichtung und einem ebenfalls stromauf des Gasschlosses angeordneten Sättiger geschaltet sein. Der Wärmetauscher überträgt damit Wärme aus dem dem Sättiger zuströmenden Synthesegas in das vom Sättiger abströmende Synthesegas. Ein solcher auch als Synthesegas-Wärmetauscher bezeichneter Wärmetauscher bewirkt somit eine zumindest teilweise wärmeseitige Umführung des Sättigers, so dass durch die Aufheizung des Synthesegases durch das Synthesegas die thermodynamischen Verluste des Gesamtprozesses besonders gering gehalten sind. Durch eine derartige Anordnung ist somit ein besonders günstiger Wärmetausch erreichbar, da - unter der Randbedingung konstanter Endtemperatur - eine vergleichsweise große Wärmemenge auf das aus dem Sättiger abströmende Synthesegas übertragen werden kann.

Selbstverständlich sind als Alternativen auch andere Ausgestaltungen für die Schaltung des Wärmetauschers denkbar, wie z.B. die Beaufschlagung mit heißem Speisewasser oder Dampf zur Vorwärmung des Synthesegases.

Zur Mischung des Synthesegases mit Stickstoff kann eine Mischvorrichtung stromauf des zur Beaufschlagung des Synthesegases mit Wasserdampf vorgesehenen Sättigers in die Gasleitung geschaltet sein. Die Zumischung von Stickstoff zu dem Synthesegas erfolgt zur Einhaltung besonders geringer NOₓ-Grenzwerte bei der Verbrennung des Synthesegases.

Vorteilhafterweise mündet eine Spülleitung unmittelbar stromab der Gasschlossarmatur in die Gasleitung. Auf diese Weise ist eine zuverlässige Spülung des Brennstoffsystems zwischen der Gasschlossarmatur und der Brennkammer gewährleistet. Aufgrund der kompakten Bauweise des Brennstoffsystems fallen die erforderlichen Spülmengen besonders gering aus, wodurch sich der Betrieb der Anlage besonders wirtschaftlich gestaltet. Der Einsatz von Stickstoff oder einem weiteren Inertmedium zur Spülung des Brennstoffsystems ist im Vergleich zum Spülen mit Dampf besonders vorteilhaft, weil keine Entwässerung des Leitungssystems wie bei einer Spülung mit Dampf erforderlich ist. Außerdem ist Stickstoff oder ein anderes Inertmedium unabhängig vom Betrieb des Wasser-Dampf-Systems bereitstellbar. Außerdem weist Stickstoff oder das Inertmedium eine im Vergleich zu aus der Anlage entnommenem Dampf geringe Temperatur auf, wodurch ein Schutz der Komponenten vor unzulässig hohen Dampftemperaturen entfallen kann. Des weiteren besteht keine oder nur eine geringfügige Korrosionsanfälligkeit, so dass kein hochlegierter Stahl eingesetzt werden muss. Prinzipiell kann jedoch auch mit Dampf, falls vorhanden, gespült werden. Bei der Stickstoffspülung oder der Spülung mit einem sonstigen Inertmedium außer Dampf ist ein Zwischenspeicher vorteilhaft. Durch die Zwischenspeicherung wird eine Spülung auch bei Ausfall des Bereitstellungs-Systems für das Inertmedium gewährleistet.

Für eine nahezu vollständige Umsetzung des fossilen Brennstoffs bei hohen Temperaturen in der Vergasungseinrichtung ist üblicherweise eine Zufuhr von Sauerstoff aus einer Luftzerlegungsanlage vorgesehen. Dabei fällt Stickstoff an. Dieser Stickstoff, insbesondere anfallender Rein-Stickstoff, kann nun zur Spülung herangezogen werden. Hierfür ist vorteilhafterweise der Zwischenspeicher über eine Zufuhrleitung an die Luftzerlegungsanlage angeschlossen.

In die von der Luftzerlegungsanlage wegführende Zufuhrleitung mündet vorteilhafterweise eine Reserveleitung, die eingangsseitig an ein Notbefüllsystem für Stickstoff, insbesondere Rein-Stickstoff, angeschlossen ist. Hierdurch ist auch beim Ausfall der Luftzerlegungsanlage eine Spülung des Brennstoffsystems mit Stickstoff, insbesondere Rein-Stickstoff, besonders zuverlässig gewährleistet.

Das Spülsystem mit Zwischenspeicher, der gegebenenfalls an eine Luftzerlegungsanlage angeschlossen ist, ist im übrigen auch ohne die oben dargestellte spezifische Ausgestaltung des Gasschlosses in einer Gas- und Dampfturbinenanlage einsetzbar.

Bezüglich des Verfahrens zum Spülen des Brennstoffsystems einer Gas- und Dampfturbinenanlage wird die Aufgabe erfindungsgemäß dadurch gelöst, dass das Brennstoffsystem zwischen dem Gasschloss und der Brennkammer in Vorwärtsrichtung, d.h. in Richtung der Brennkammer, gespült wird. Mit lediglich einer Vorwärtsspülung fallen die Zeiten für eine Spülung besonders gering aus, wodurch sich der Wechsel von Synthesegas auf Zweitbrennstoff besonders wirtschaftlich gestaltet.

Falls zur Spülung Stickstoff vorgesehen ist, wird dieser vorteilhafterweise der Luftzerlegungsanlage entnommen. Hierfür wird der in der Luftzerlegungsanlage erzeugte Stickstoff, insbesondere als Rein-Stickstoff, dem Zwischenspeicher über die Zufuhrleitung zugeführt. Aus dem Zwischenspeicher kann der Rein-Stickstoff dann bei Bedarf zur Spülung des Brennstoffsystems in die Gasleitung eingespeist werden.

Vorteilhafterweise wird das Brennstoffsystem zwischen der Brennkammer und dem Gasschloss in Vorwärtsrichtung mit einem inerten Spülmedium, welches zwischen der Gasschlossarmatur und der Regelarmatur zugeführt wird, gespült. Ebenso wie das Gasturbinen-Brennstoffsystem muss das Vergasungssystem zwischen Vergasungseinrichtung und Gasschloss mit einem Inertmedium aufgrund der sicherheitstechnischen Vorschriften gespült werden. In der Regel wird hierfür Stickstoff, insbesondere Rein-Stickstoff auf dem erforderlichen Druckniveau als Inertmedium eingesetzt. Das Konzept und die Randbedingungen der Spülprozedur sind abhängig vom eingesetzten Vergasungsverfahren.

Ein Ausführungsbeispiel der Erfindung wird anhand einer Zeichnung näher erläutert. Darin zeigen
- FIG 1: eine Gas- und Dampfturbinenanlage, wobei der Gasturbine ein Brennstoffsystem mit einer Vergasungseinrichtung vorgeschaltet ist, und
- FIG 2: einen Ausschnitt gemäß Figur 1.

Die Gas- und Dampfturbinenanlage 1 gemäß der Figur umfasst eine Gasturbinenanlage 1a und eine Dampfturbinenanlage 1b. Die Gasturbinenanlage 1a umfasst eine Gasturbine 2 mit angekoppeltem Luftverdichter 4 und eine der Gasturbine 2 vorgeschaltete Brennkammer 6, die an eine Druckluftleitung 8 des Verdichters 4 angeschlossen ist. Die Gasturbine 2 und der Luftverdichter 4 sowie ein Generator 10 sitzen auf einer gemeinsamen Welle 12.

Die Dampfturbinenanlage 1b umfasst eine Dampfturbine 20 mit angekoppeltem Generator 22 und in einem Wasser-Dampf-Kreislauf 24 einen der Dampfturbine 20 nachgeschalteten Kondensator 26 sowie einen Abhitzedampferzeuger 30. Die Dampfturbine 20 besteht aus einer ersten Druckstufe oder einem Hochdruckteil 20a und einer zweiten Druckstufe oder einem Mitteldruckteil 20b sowie einer dritten Druckstufe oder einem Niederdruckteil 20c, die über eine gemeinsame Welle 32 den Generator 22 antreiben.

Zum Zuführen von in der Gasturbine 2 entspanntem Arbeitsmittel AM oder Rauchgas in den Abhitzedampferzeuger 30 ist eine Abgasleitung 34 an einen Eingang 30a des Abhitzedampferzeugers 30 angeschlossen. Das entspannte Arbeitsmittel AM aus der Gasturbine 2 verlässt den Abhitzedampferzeuger 30 über dessen Ausgang 30b in Richtung auf einen nicht näher dargestellten Kamin.

Der Abhitzedampferzeuger 30 umfasst einen Kondensatvorwärmer 40, der eingangsseitig über eine Kondensatleitung 42, in die eine Kondensatpumpeneinheit 44 geschaltet ist, mit Kondensat K aus dem Kondensator 26 bespeisbar ist. Der Kondensatvorwärmer 40 ist ausgangsseitig über eine Leitung 45 an einen Speisewasserbehälter 46 angeschlossen. Zur bedarfsweisen Umführung des Kondensatvorwärmers 40 kann zudem die Kondensatleitung 42 über eine nicht dargestellte Umführungsleitung direkt mit dem Speisewasserbehälter 46 verbunden sein. Der Speisewasserbehälter 46 ist über eine Leitung 47 an eine Hochdruckspeisepumpe 48 mit Mitteldruckentnahme angeschlossen.

Die Hochdruckspeisepumpe 48 bringt das aus dem Speisewasserbehälter 46 abströmende Speisewasser S auf ein für eine dem Hochdruckteil 20a der Dampfturbine 20 zugeordnete Hochdruckstufe 50 des Wasser-Dampf-Kreislaufs 24 geeignetes Druckniveau. Das unter hohem Druck stehende Speisewasser S ist der Hochdruckstufe 50 über einen Speisewasservorwärmer 52 zuführbar, der ausgangsseitig über eine mit einem Ventil 54 absperrbare Speisewasserleitung 56 an eine Hochdrucktrommel 58 angeschlossen ist. Die Hochdrucktrommel 58 ist mit einem im Abhitzedampferzeuger 30 angeordneten Hochdruckverdampfer 60 zur Bildung eines Wasser-Dampf-Umlaufs 62 verbunden. Zum Abführen von Frischdampf F ist die Hochdrucktrommel 58 an einen im Abhitzedampferzeuger 30 angeordneten Hochdrucküberhitzer 64 angeschlossen, der ausgangsseitig mit dem Dampfeinlass 66 des Hochdruckteils 20a der Dampfturbine 20 verbunden ist.

Der Dampfauslass 68 des Hochdruckteils 20a der Dampfturbine 20 ist über einen Zwischenüberhitzer 70 an den Dampfeinlass 72 des Mitteldruckteils 20b der Dampfturbine 20 angeschlossen. Dessen Dampfauslass 74 ist über eine Überströmleitung 76 mit dem Dampfeinlass 78 des Niederdruckteils 20c der Dampfturbine 20 verbunden. Der Dampfauslass 80 des Niederdruckteils 20c der Dampfturbine 20 ist über eine Dampfleitung 82 an den Kondensator 26 angeschlossen, so dass ein geschlossener Wasser-Dampf-Kreislauf 24 entsteht.

Von der Hochdruckspeisepumpe 48 zweigt zudem an einer Entnahmestelle, an der das Kondensat K einen mittleren Druck erreicht hat, eine Zweigleitung 84 ab. Diese ist über einen weiteren Speisewasservorwärmer 86 oder Mitteldruck-Economizer mit einer dem Mitteldruckteil 20b der Dampfturbine 20 zugeordneten Mitteldruckstufe 90 des Wasser-Dampf-Kreislaufs verbunden. Der zweite Speisewasservorwärmer 86 ist dazu ausgangsseitig über eine mit einem Ventil 92 absperrbare Speisewasserleitung 94 an eine Mitteldrucktrommel 96 der Mitteldruckstufe 90 angeschlossen. Die Mitteldrucktrommel 96 ist mit einer im Abhitzedampferzeuger 30 angeordneten, als Mitteldruckverdampfer ausgebildeten Heizfläche 98 zur Bildung eines Wasser-Dampf-Umlaufs 100 verbunden. Zum Abführen von Mitteldruck-Frischdampf F' ist die Mitteldrucktrommel 96 über eine Dampfleitung 102 an den Zwischenüberhitzer 70 und somit an den Dampfeinlass 72 des Mitteldruckteils 20b der Dampfturbine 20 angeschlossen.

Von der Leitung 47 zweigt eine weitere, mit einer Niederdruckspeisepumpe 107 versehene und mit einem Ventil 108 absperrbare Leitung 110 ab, die an eine dem Niederdruckteil 20c der Dampfturbine 20 zugeordnete Niederdruckstufe 120 des Wasser-Dampf-Kreislaufs 24 angeschlossen ist. Die Niederdruckstufe 120 umfasst eine Niederdrucktrommel 122, die mit einer im Abhitzedampferzeuger 30 angeordneten, als Niederdruckverdampfer ausgebildeten Heizfläche 124 zur Bildung eines Wasser-Dampf-Umlaufs 126 verbunden ist. Zum Abführen von Niederdruck-Frischdampf F" ist die Niederdrucktrommel 122 über eine Dampfleitung 127, in die ein Niederdrucküberhitzer 128 geschaltet ist, an die Überströmleitung 76 angeschlossen. Der Wasser-Dampf-Kreislauf 24 der Gas- und Dampfturbinenanlage 1 umfasst im Ausführungsbeispiel somit drei Druckstufen 50, 90, 120. Alternativ können aber auch weniger, insbesondere zwei, Druckstufen vorgesehen sein.

Die Gasturbinenanlage 1a ist für den Betrieb mit einem vergasten Rohgas oder Synthesegas SG, das durch die Vergasung eines fossilen Brennstoffs B erzeugt wird, ausgelegt. Als Synthesegas kann beispielsweise vergaste Kohle oder vergastes Öl vorgesehen sein. Hierzu umfasst die Gasturbinenanlage 1a ein Brennstoffsystem 129, über das der Brennkammer 6 der Gasturbine 4 Synthesegas zuführbar ist. Das Brennstoffsystem 129 umfasst eine Gasleitung 130, die eine Vergasungseinrichtung 132 mit der Brennkammer 6 der Gasturbine verbindet. Der Vergasungseinrichtung 132 ist über ein Eintragssystem 134 Kohle, Erdgas oder Öl als fossiler Brennstoff B zuführbar. Weiterhin umfasst das Vergasungssystem 129 Komponenten, die zwischen der Vergasungseinrichtung 132 und der Brennkammer 6 der Gasturbine 2 in die Gasleitung 130 geschaltet sind.

Zur Bereitstellung des für die Vergasung des fossilen Brennstoffs B benötigten Sauerstoffs O₂ ist der Vergasungseinrichtung 132 über eine Sauerstoffleitung 136 eine dem Vergasungssystem 129 zugehörige Luftzerlegungsanlage 138 vorgeschaltet. Die Luftzerlegungsanlage 138 ist eingangsseitig mit einem Luftstrom L beaufschlagbar, der sich aus einem ersten Teilstrom T1 und einem zweiten Teilstrom T2 zusammensetzt. Der erste Teilstrom T1 ist der im Luftverdichter 4 verdichteten Luft entnehmbar. Dazu ist die Luftzerlegungsanlage 138 eingangsseitig an eine Entnahmeluftleitung 140 angeschlossen, die an einer Zweigstelle 142 von der Druckluftleitung 8 abzweigt. In die Entnahmeluftleitung 140 mündet zudem eine weitere Luftleitung 143, in die ein zusätzlicher Luftverdichter 144 geschaltet ist und über die der zweite Teilstrom T2 der Luftzerlegungsanlage 138 zuführbar ist. Im Ausführungsbeispiel setzt sich somit der der Luftzerlegungsanlage 138 zuströmende gesamte Luftstrom L zusammen aus dem von der Druckluftleitung 8 abgezweigten Teilstrom T1 und aus dem vom zusätzlichen Luftverdichter 144 geförderten Luftstrom T2. Ein derartiges Schaltungskonzept wird auch als teilintegriertes Anlagenkonzept bezeichnet. In einer alternativen Ausgestaltung, dem sogenannten vollintegrierten Anlagenkonzept, kann die weitere Luftleitung 143 mitsamt dem zusätzlichen Luftverdichter 144 entfallen, so dass die Bespeisung der Luftzerlegungsanlage 138 mit Luft vollständig über den der Druckluftleitung 8 entnommenen Teilstrom T1 erfolgt.

Der in der Luftzerlegungsanlage 138 bei der Zerlegung des Luftstroms L zusätzlich zum Sauerstoff O₂ gewonnene Stickstoff N₂ wird über eine an die Luftzerlegungsanlage 138 angeschlossene Stickstoffleitung 145 einer Mischvorrichtung 146 zugeführt und dort dem Synthesegas SG zugemischt. Die Mischvorrichtung 146 ist dabei für eine besonders gleichförmige und strähnenfreie Vermischung des Stickstoffs N₂ mit dem Synthesegas SG ausgebildet.

Das von der Vergasungseinrichtung 132 abströmende Synthesegas SG gelangt über die Gasleitung 130 zunächst in einen Synthesegas-Abhitzedampferzeuger 147, in dem durch Wärmetausch mit einem Strömungsmedium eine Abkühlung des Synthesegases SG erfolgt. Bei diesem Wärmetausch erzeugter Hochdruckdampf wird in nicht näher dargestellter Weise der Hochdruckstufe 50 des Wasser-Dampf-Kreislaufs 24 zugeführt.

In Strömungsrichtung des Synthesegases SG gesehen hinter dem Synthesegas-Abhitzedampferzeuger 147 und vor einer Mischvorrichtung 146 sind in die Gasleitung 130 eine Entstaubungseinrichtung 148 für das Synthesegas SG sowie eine Entschwefelungsanlage 149 geschaltet. In alternativer Ausgestaltung kann anstelle der Entstaubungseinrichtung 148, insbesondere bei Vergasung von Öl als Brennstoff, auch eine Rußwäschevorrichtung vorgesehen sein.

Für einen besonders geringen Schadstoffausstoß bei der Verbrennung des vergasten Brennstoffs in der Brennkammer 6 ist eine Beladung des vergasten Brennstoffs mit Wasserdampf vor Eintritt in die Brennkammer 6 vorgesehen. Diese kann in wärmetechnisch besonders vorteilhafter Weise in einem Sättigersystem erfolgen. Dazu ist in die Gasleitung 130 ein Sättiger 150 geschaltet, in dem der vergaste Brennstoff im Gegenstrom zu aufgeheiztem Sättigerwasser geführt ist. Das Sättigerwasser zirkuliert dabei in einem an den Sättiger 150 angeschlossenen Sättigerkreislauf 152, in den eine Umwälzpumpe 154 sowie zur Vorheizung des Sättigerwassers ein Wärmetauscher 156 geschaltet sind. Der Wärmetauscher 156 ist dabei primärseitig mit vorgewärmtem Speisewasser aus der Mitteldruckstufe 90 des Wasser-Dampf-Kreislaufs 24 beaufschlagt. Zum Ausgleich der bei der Sättigung des vergasten Brennstoffs auftretenden Verluste an Sättigerwasser ist an den Sättigerkreislauf 152 eine Einspeiseleitung 158 angeschlossen.

In Strömungsrichtung des Synthesegases SG gesehen hinter dem Sättiger 150 ist in die Gasleitung 130 sekundärseitig ein als Synthesegas-Mischgas-Wärmetauscher wirkender Wärmetauscher 159 geschaltet. Der Wärmetauscher 159 ist dabei primärseitig an einer Stelle vor der Entstaubungsanlage 148 ebenfalls in die Gasleitung 130 geschaltet, so dass das der Entstaubungsanlage 148 zuströmende Synthesegas SG einen Teil seiner Wärme auf das aus dem Sättiger 150 abströmende Synthesegas SG überträgt. Die Führung des Synthesegases SG über den Wärmetauscher 159 vor Eintritt in die Entschwefelungsanlage 149 kann dabei auch bei einem hinsichtlich der anderen Komponenten abgeänderten Schaltungskonzept vorgesehen sein. Insbesondere bei Einschaltung einer Rußwäscheeinrichtung kann der Wärmetauscher bevorzugt synthesegasseitig stromab der Rußwäscheeinrichtung angeordnet sein.

Zwischen den Sättiger 150 und den Wärmetauscher 159 ist in die Gasleitung 130 sekundärseitig ein weiterer Wärmetauscher 160 geschaltet, der primärseitig speisewasserbeheizt oder auch dampfbeheizt sein kann. Durch den als Synthesegas-Reingas-Wärmetauscher ausgebildeten Wärmetauscher 159 und den Wärmetauscher 160 ist dabei eine besonders zuverlässige Vorwärmung des der Brennkammer 6 der Gasturbine 2 zuströmenden Synthesegases SG auch bei verschiedenen Betriebszuständen der Gas- und Dampfturbinenanlage 1 gewährleistet.

Zur Kühlung des der Luftzerlegungsanlage 138 zuzuführenden, auch als Entnahmeluft bezeichneten Teilstroms T1 verdichteter Luft ist in die Entnahmeluftleitung 140 primärseitig ein Wärmetauscher 162 geschaltet, der sekundärseitig als Mitteldruckverdampfer für ein Strömungsmedium S' ausgebildet ist. Der Wärmetauscher 162 ist zur Bildung eines Verdampferumlaufs 163 mit einer als Mitteldrucktrommel ausgebildeten Wasser-Dampf-Trommel 164 verbunden. Die Wasser-Dampf-Trommel 164 ist über Leitungen 166, 168 mit der dem Wasser-Dampf-Umlauf 100 zugeordneten Mitteldrucktrommel 96 verbunden. Alternativ kann der Wärmetauscher 162 sekundärseitig aber auch direkt an die Mitteldrucktrommel 96 angeschlossen sein. Im Ausführungsbeispiel ist die Wasser-Dampf-Trommel 164 also mittelbar an die als Mitteldruckverdampfer ausgebildete Heizfläche 98 angeschlossen. Zur Nachspeisung von verdampftem Strömungsmedium S' ist an die Wasser-Dampf-Trommel 164 zudem eine Speisewasserleitung 170 angeschlossen.

In Strömungsrichtung des Teilstroms T1 verdichteter Luft gesehen nach dem Wärmetauscher 162 ist in die Entnahmeluftleitung 140 ein weiterer Wärmetauscher 172 geschaltet, der sekundärseitig als Niederdruckverdampfer für ein Strömungsmedium S'' ausgebildet ist. Der Wärmetauscher 172 ist dabei zur Bildung eines Verdampferumlaufs 174 an eine als Niederdrucktrommel ausgebildete Wasser-Dampf-Trommel 176 angeschlossen. Im Ausführungsbeispiel ist die Wasser-Dampf-Trommel 176 über Leitungen 178, 180 an die dem Wasser-Dampf-Umlauf 126 zugeordnete Niederdrucktrommel 122 angeschlossen und somit mittelbar mit der als Niederdruckverdampfer ausgebildeten Heizfläche 124 verbunden. Alternativ kann die Wasser-Dampf-Trommel 176 aber auch in anderer geeigneter Weise geschaltet sein, wobei der Wasser-Dampf-Trommel 176 entnommener Dampf einem Nebenverbraucher als Prozessdampf und/oder als Heizdampf zuführbar ist. In weiterer alternativer Ausgestaltung kann der Wärmetauscher 172 sekundärseitig auch direkt an die Niederdrucktrommel 122 angeschlossen sein. Die Wasser-Dampf-Trommel 176 ist zudem an eine Speisewasserleitung 182 angeschlossen.

Die Verdampferumläufe 163, 174 können jeweils als Zwangumlauf ausgebildet sein, wobei der Umlauf des Strömungsmedium S' bzw. S'' durch eine Umwälzpumpe gewährleistet ist, und wobei das Strömungsmedium S', S'' im als Verdampfer ausgebildeten Wärmetauscher 162 bzw. 172 mindestens teilweise verdampft. Im Ausführungsbeispiel sind jedoch sowohl der Verdampferumlauf 163 als auch der Verdampferumlauf 174 jeweils als Naturumlauf ausgebildet, wobei der Umlauf des Strömungsmediums S' bzw. S'' durch die sich beim Verdampfungsprozess einstellenden Druckdifferenzen und/oder durch die geodätische Anordnung des jeweiligen Wärmetauschers 162 bzw. 172 und der jeweiligen Wasser-Dampf-Trommel 164 bzw. 176 gewährleistet ist. Bei dieser Ausgestaltung ist in den Verdampferumlauf 163 bzw. in den Verdampferumlauf 174 jeweils lediglich eine (nicht dargestellte) vergleichsweise gering dimensionierte Umwälzpumpe zum Anfahren des Systems geschaltet.

Zur Wärmeeinkopplung in den Sättigerkreislauf 152 ist zusätzlich zum Wärmetauscher 156, der mit aufgeheiztem, nach dem Speisewasservorwärmer 86 abgezweigtem Speisewasser beaufschlagbar ist, ein Sättigerwasser-Wärmetauscher 184 vorgesehen, der primärseitig mit Speisewasser S aus dem Speisewasserbehälter 46 beaufschlagbar ist. Dazu ist der Sättigerwasser-Wärmetauscher 184 primärseitig eingangsseitig über eine Leitung 186 an die Zweigleitung 84 und ausgangsseitig über eine Leitung 188 an den Speisewasserbehälter 46 angeschlossen. Zur Wiederaufheizung des aus dem Sättigerwasser-Wärmetauscher 184 abströmenden gekühlten Speisewassers S ist in die Leitung 188 ein zusätzlicher Wärmetauscher 190 geschaltet, der primärseitig dem Wärmetauscher 172 in der Entnahmeluftleitung 140 nachgeschaltet ist. Durch eine derartige Anordnung ist eine besonders hohe Wärmerückgewinnung aus der Entnahmeluft und somit ein besonders hoher Wirkungsgrad der Gas- und Dampfturbinenanlage 1 erreichbar.

In Strömungsrichtung des Teilstroms T1 gesehen zwischen dem Wärmetauscher 172 und dem Wärmetauscher 190 zweigt von der Entnahmeluftleitung 140 eine Kühlluftleitung 192 ab, über die der Gasturbine 2 eine Teilmenge T' des gekühlten Teilstroms T als Kühlluft zur Schaufelkühlung zuführbar ist.

Beim Abfahren des Brennstoffsystems 129 ist eine Spülung erforderlich. Dies erfolgt in der Weise, dass in einem oder mehreren Schritten ein erster und ein zweiter Bereich des Brennstoff-Vergasungssystems 129 separat mit Stickstoff gespült werden. Das Vergasungssystem oder der erste Bereich und das Gasturbinen-Brennstoffsystem - oder der zweite Bereich sind dabei durch ein Gasschloss 200 im Bereich 236 voneinander getrennt. Das Vergasungssystem umfasst dabei die Vergasungseinrichtung 132 bis zum Gasschloss 200 und das Gasturbinen-Brennstoffsystem umfasst das Gasschloss 200 und die nachgeschalteten Komponenten bis zur Brennkammer 6 der Gasturbine 2.

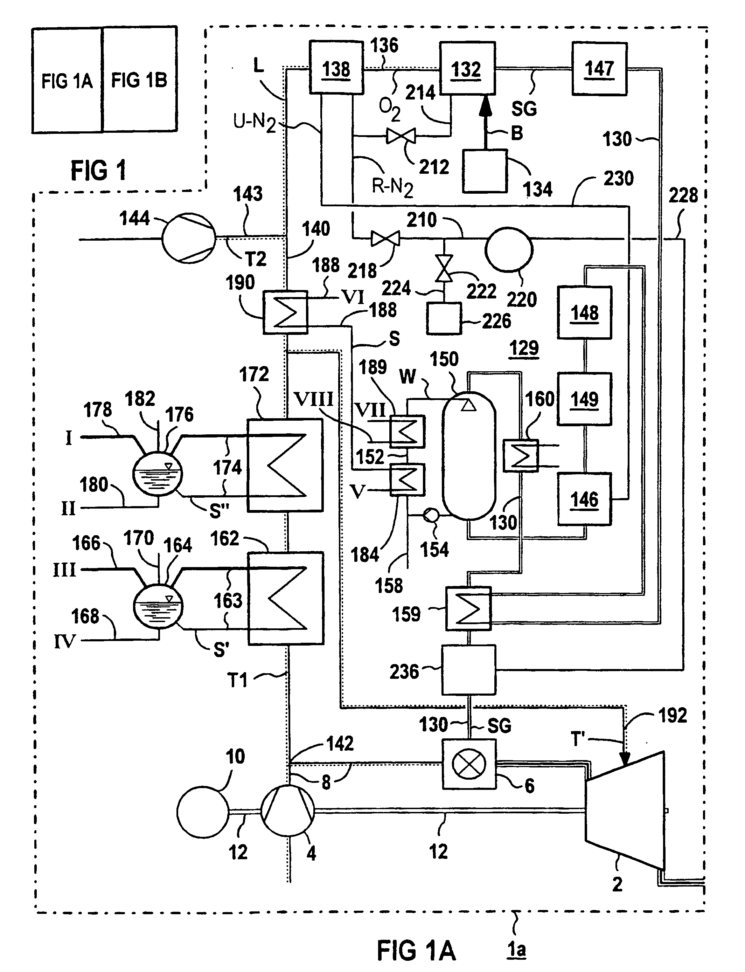

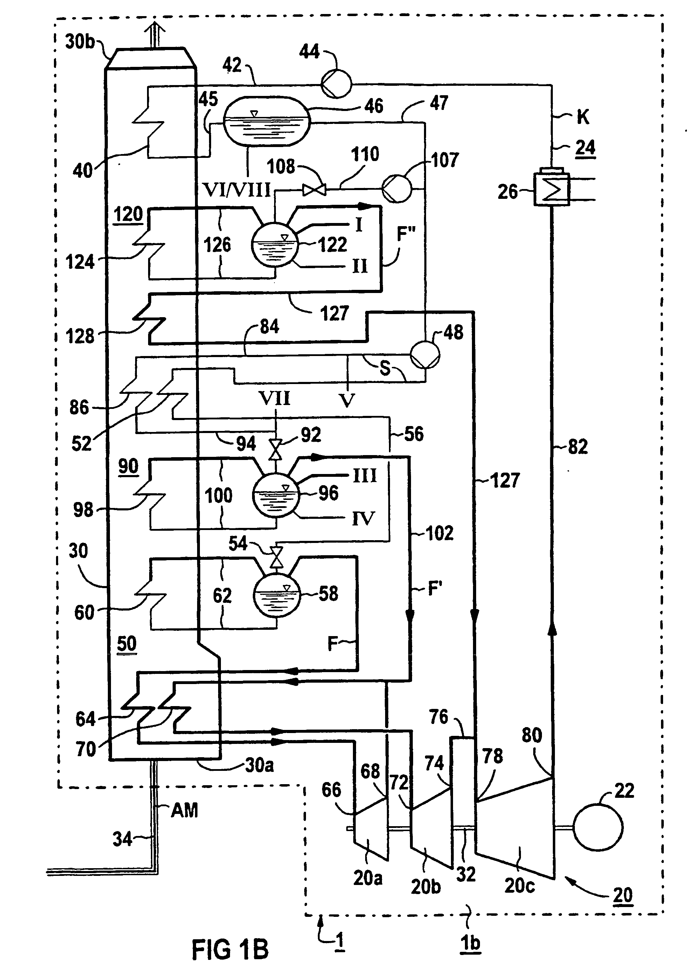

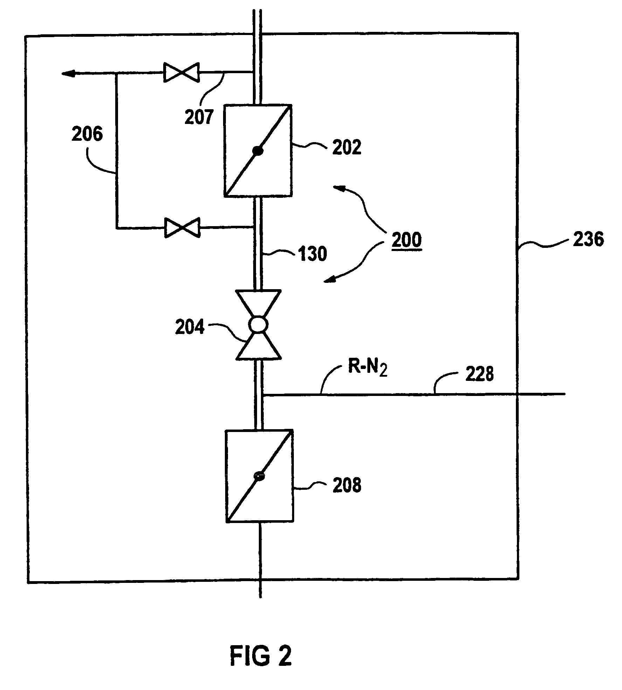

Das Gasschloss 200 ist im Detail in Figur 2 (einer vergrößerten Abbildung des Bereichs 236) dargestellt und in der Gasleitung 130 angeordnet, die in Figur 1A zu sehen ist. Das Gasschloss 200 ist nach dem Wärmetauscher 159 in der Gasleitung 130 angeordnet. Das Gasschloss umfasst eine in der Gasleitung 130 angeordnete Schnellschlussarmatur 202, der unmittelbar eine als Kugelhahn ausgeführte Gasschlossarmatur 204 nachgeschaltet ist. Über die Abgasleitung 207 stromauf der Gasschlossarmatur 202 wird Restgas beim Spülen nach Abschalten der Vergasungseinrichtung oder beim Spülen des Sättigers und nachgeschalteten Wärmetauschers zu einer Fackel abgeführt. Die Abgasleitung 207 mit zugehöriger Armatur dient als Druckentlastungssystem 206 des Gasschlosses. Über das Gasschloss 200 ist die Gasleitung 130 gasdicht absperrbar und bei Bedarf über die Schnellschlussarmatur 202 in besonders kurzer Zeit verschließbar.

Dem Gasschloss 200 ist unmittelbar eine in die Gasleitung 130 geschaltete Regelarmatur 208, nachgeschaltet, über die der Brennstoffstrom zur Gasturbine in allen Lastfällen geregelt wird.

Zur Spülung des Vergasungssystems oder des ersten Bereichs des Brennstoffsystems mit Stickstoff N₂, also von der Vergasungseinrichtung 132 bis zum Gasschloss 200, ist Rein-Stickstoff R-N₂ aus der Luftzerlegungsanlage 138 vorgesehen. Hierzu wird der in der Luftzerlegungsanlage 138 bei der Zerlegung des Luftstroms L zusätzlich zum Sauerstoff O₂ erzeugte Stickstoff N₂ als Rein-Stickstoff R-N₂ über eine Zufuhrleitung 210 aus der Luftzerlegungsanlage 138 abgeführt. Von der ersten Zufuhrleitung 210 zweigt eine mit einem Ventil 212 absperrbare Zweigleitung 214 ab, die zum Spülen des ersten Bereichs des Brennstoffsystems 129 in die Vergasungseinrichtung 132 für fossilen Brennstoff B mündet.

Zur Spülung des zweiten Bereichs oder des Gasturbinen-Brennstoffsystems 129 mit Stickstoff N₂ als Spülmedium ist ebenfalls Rein-Stickstoff R-N₂ vorgesehen. Hierzu mündet die Zufuhrleitung 210 in einen Stickstoffspeicher 220. In die Zufuhrleitung 210 mündet zusätzlich eine mit einem Ventil 222 absperrbare Reserveleitung 224, die eingangsseitig an ein Notbefüllsystem 226 für Rein-Stickstoff R-N₂ angeschlossen ist. Dadurch, dass der Stickstoffspeicher 220 sowohl an die Luftzerlegungsanlage 138 als auch an das Notbefüllsystem 226 angeschlossen ist, kann er sowohl mit Rein-Stickstoff R-N₂ aus der Luftzerlegungsanlage 138 als auch mit Rein-Stickstoff R-N₂ aus dem Notbefüllsystem 226 beschickt werden. Dadurch ist auch bei einem Ausfall der Luftzerlegungsanlage 138 eine Spülung des Vergasungssystems 129 besonders zuverlässig gewährleistet. Der Stickstoffspeicher 226 ist dabei so dimensioniert, dass er den Bedarf an Rein-Stickstoff R-N₂ für den Spülvorgang einschließlich ausreichend hoher Reservekapazität abdeckt. Der Stickstoffspeicher 226 ist ausgangsseitig über eine Stickstoffleitung 228 an die Gasleitung 130 angeschlossen. Die Einmündung der Stickstoffleitung 228 in die Gasleitung 130 erfolgt stromab des Synthesegases SG unmittelbar nach dem Gasschloss 200, also nach der Gasschlossarmatur 204.

Von der Luftzerlegungsanlage 138 zweigt zum Zuführen von in der Luftzerlegungsanlage 138 erzeugtem unreinen Stickstoff U-N₂ eine zweite Zufuhrleitung 230 ab, die in die Mischvorrichtung 146 mündet. In der Mischvorrichtung 146 wird der Unrein-Stickstoff U-N₂ dem Synthesegas SG zur Verringerung der NOₓ-Emissionen der Gasturbine zugemischt. Die Mischvorrichtung 146 ist dabei für eine besonders gleichförmige und strähnenfreie Vermischung des Stickstoffs N₂ mit dem Synthesegas SG ausgebildet.

Bei jedem Umlasten der Gasturbine 4 von Synthesegas SG auf Zweitbrennstoff, was einem Wechsel des der Brennkammer 6 zugeführten Brenngases entspricht, ist eine Spülung des Gasturbinen-Brennstoffsystems 129 mit Stickstoff vorgesehen. Durch den Spülvorgang muss das sich im Gasturbinen-Brennstoffsystem befindliche Synthesegas SG aus sicherheitstechnischen Gründen annähernd vollständig verdrängt werden.

Zur Spülung des ersten Bereichs des Brennstoffsystems 129 oder des Vergasungssystems mit Rein-Stickstoff R-N₂ wird über die Zufuhrleitung 210 und die Zweigleitung 214 in die Vergasungseinrichtung 132 Rein-Stickstoff R-N₂ eingespeist. Hierbei ist üblicherweise eine Vorwärtsspülung des Bereichs zwischen der Vergasungseinrichtung 132 und dem Gasschloss 200 mit ausreichend großen Mengen von Rein-Stickstoff R-N₂ als Spülmedium über einen längeren Zeitraum vorgesehen, um eine Verdrängung des Synthesegases SG aus diesem Bereich des Brennstoffsystems 129 zu gewährleisten. Das Abgas des Spülvorgangs wird über die Abgasleitung 207 stromauf des Gasschlosses 200 aus dem Vergasungssystem 129 abgeführt.

Das Brennstoffsystem zwischen dem Gasschloss 200 und der Brennkammer 6 der Gasturbine 2 wird mit Rein-Stickstoff R-N₂ in Vorwärtsrichtung gespült. Hierzu wird der in der Luftzerlegungsanlage 138 erzeugte Rein-Stickstoff R-N₂ über die Stickstoffleitung 228 der Gasleitung 130 zugeführt. Aufgrund des geringen Volumens dieses Systems ist eine Vorwärtsspülung mit Rein-Stickstoff R-N₂ ausreichend

Durch die kompakte Ausführung des Gasschlosses 200, umfassend eine Schnellschlussarmatur 202, ein an eine Fackel angeschlossenes Druckentlastungssystem 206 und eine Gasschlossarmatur 204, sowie die Anordnung des Gasschlosses 200 stromab des Synthesegases SG nach dem Wärmetauscher 159 ist die nach dem Umlasten der Gasturbine 2 von Synthesegas SG auf Zweitbrennstoff erforderliche Spülung des Brennstoffsystems 129 besonders einfach und in besonders kurzer Zeit ausführbar. Dies wird erreicht durch eine vergleichsweise geringe Anzahl und eine besonders günstige Anordnung der Komponenten, wodurch das zu spülende Volumen besonders gering ausfällt. Die Spülung ist auch beim Abfahren der Gas- und Dampfturbinenanlage 1 erforderlich. Hierbei erweist es sich als besonders günstig, dass zum Spülen Stickstoff vorgesehen ist, da dieser unabhängig vom Zustand des Abhitzedampferzeugers 30 bereitgestellt werden kann. Somit ist die Gas- und Dampfturbinenanlage 1 besonders zuverlässig betreibbar.

## Patentansprüche

1. Gas- und Dampfturbinenanlage (1) mit einem einer Gasturbine (2) rauchgasseitig nachgeschalteten Abhitzedampferzeuger (30), dessen Heizflächen in den Wasser-Dampf-Kreislauf (24) einer Dampfturbine (20) geschaltet sind, und mit einem der Brennkammer (6) der Gasturbine (2) vorgeschalteten Brennstoffsystem (129), das eine Vergasungseinrichtung (132) für fossilen Brennstoff (B) und eine von der Vergasungseinrichtung (132) abzweigende und in die Brennkammer (6) der Gasturbine (2) mündende Gasleitung (130) umfasst,
wobei stromauf der Brennkammer (6) in die Gasleitung (130) ein Gasschloss (200) geschaltet ist, welches eine Schnellschlussarmatur (202), ein Druckentlastungs- oder Überdrucksystem (206) und eine Gasschlossarmatur (204) umfasst, wobei stromab der Gasschlossarmatur (204) eine Spülleitung (228) zur Spülung in die Gasleitung (130) mündet und wobei als Spülmedium inertes und dampffreies Spülmedium verwendet wird.

2. Gas- und Dampfturbinenanlage (1) nach Anspruch 1, bei der ein Wärmetauscher (159) stromauf des Gasschlosses (200) in die Gasleitung (130) geschaltet ist.

3. Gas- und Dampfturbinenanlage (1) nach Anspruch 1 oder 2, bei der stromauf des Gasschlosses (200) ein Sättiger (150) in die Gasleitung (130) geschaltet ist.

4. Gas- und Dampfturbinenanlage (1) nach Anspruch 3, bei der der Sättiger (150) stromauf des Wärmetauschers (159) angeordnet ist.

5. Gas- und Dampfturbinenanlage (1) nach einem der vorhergehenden Ansprüche, bei der die Spülleitung (228) unidirektional ausgebildet ist.

6. Gas- und Dampfturbinenanlage (1) nach Anspruch 5, bei der die Spülleitung (228) an einen Zwischenspeicher (220) angeschlossen ist.

7. Gas- und Dampfturbinenanlage (1) nach Anspruch 6, bei der der Zwischenspeicher (220) über eine Zufuhrleitung (210) an eine Luftzerlegungsanlage (138) angeschlossen ist.

8. Gas- und Dampfturbinenanlage (1) nach Anspruch 7, bei der in die Zufuhrleitung (210) eine Reserveleitung (224) mündet, die eingangsseitig an ein Notbefüllsystem (226) für Stickstoff (U-N₂, R-N₂), insbesondere für Rein-Stickstoff (R-N₂), angeschlossen ist.

9. Verfahren zum Spülen eines Brennstoffsystems (129) einer Gas- und Dampfturbinenanlage (1) nach einem der Ansprüche 1 bis 8, bei dem das Brennstoffsystem (129) zwischen einem Gasschloss (200) und einer Brennkammer (6) in Richtung der Brennkammer (6) dampffrei mit einem inerten Spülmedium (1) gespült wird.

10. Verfahren nach Anspruch 9, bei dem das Spülmedium (1) stromab des Gasschlosses (200) zwischen der Gasschlossarmatur (204) und der Regelarmatur (208) zugeführt wird.

11. Verfahren nach Anspruch 9 oder 10, bei dem zur Spülung Stickstoff (U-N₂, R-N₂)einer Luftzerlegungsanlage (138) entnommen wird.

## Claims

1. Gas and steam turbine installation (1), having a waste-heat steam generator (30), which is connected downstream of a gas turbine (2) on the combustion-gas side and whose heating surfaces are connected into the water/steam circuit (24) of a steam turbine (20), and having a fuel system (129), which is connected upstream of the combustion chamber (6) of the gas turbine (2) and comprises a gasification device (132) for fossil fuel (B) and a gas line (130), which branches off from the gasification device (132) and opens into the combustion chamber (6) of the gas turbine (2), a gas lock (200) being connected into the gas line (130) upstream of the combustion chamber (6), which gas lock (200) comprises a quick-action valve (202), a pressure relief or overpressure system (206) and a gas lock valve (204), a flushing line (228) for flushing opening into the gas line (130) downstream of the gas lock valve (204) and inert and stream free flushing medium being used as flushing medium.

2. Gas and steam turbine installation (1) according to Claim 1, in which a heat exchanger (159) is connected into the gas line (130) upstream of the gas lock (200).

3. Gas and steam turbine installation (1) according to Claim 1 or 2, in which a saturator (150) is connected into the gas line (130) upstream of the gas lock (200).

4. Gas and steam turbine installation (1) according to Claim 3, in which the saturator (150) is arranged upstream of the heat exchanger (159).

5. Gas and steam turbine installation (1) according to one of the preceding claims, in which the flushing line (228) is configured to be unidirectional.

6. Gas and steam turbine installation (1) according to Claim 5, in which the flushing line (228) is connected to an intermediate reservoir (220).

7. Gas and steam turbine installation (1) according to Claim 6, in which the intermediate reservoir (220) is connected via a supply line (210) to an air separation installation (138).

8. Gas and steam turbine installation (1) according to Claim 7, in which a reserve line (224) opens into the supply line (210), which reserve line (224) is connected at the inlet end to an emergency filling system (226) for nitrogen (U-N₂, R-N₂), in particular for pure nitrogen (R-N₂).

9. Method of flushing a fuel system (129) of a gas and steam turbine installation (1) according to one of Claims 1 to 8, in which the fuel system (129) is flushed steam-free, in the direction of the combustion chamber (6), with an inert flushing medium (1) between a gas lock (200) and a combustion chamber (6).

10. Method according to Claim 9, in which the flushing medium (1) is supplied downstream of the gas lock (200) between the gas lock valve (204) and the control valve (208).

11. Method according to Claim 9 or 10, in which nitrogen (U-N₂, R-N₂) is extracted from an air separation installation (138) for flushing.

## Revendications

1. Installation (1) de turbine à gaz et de turbine à vapeur comprenant un générateur (30) de vapeur à récupération de la chaleur perdue, qui est monté en aval du côté des gaz de fumée d'une turbine (2) à gaz et dont les surfaces de chauffe sont montées dans le circuit (24) eau-vapeur d'une turbine (20) à vapeur, et un système (129) de combustible, qui est monté en amont de la chambre de combustion (6) de la turbine à gaz et qui comprend un dispositif (132) de gazéification de combustible (B) fossile et un conduit (130) pour du gaz partant du dispositif (132) de gazéification et débouchant dans la chambre de combustion (6) de la turbine (2) à gaz,
dans laquelle il est monté en amont de la chambre de combustion (6) dans le conduit (130) pour du gaz un verrou (200) de gaz, qui comprend un robinet (202) à fermeture rapide, un système (206) de détente de la pression ou de surpression et un robinet (204) de verrou de gaz, tandis qu'en aval du robinet (204) de verrou de gaz débouche dans le conduit (130) pour du gaz un conduit (128) de balayage et dans laquelle on utilise comme fluide de balayage du fluide de balayage inerte et exempt de vapeur.

2. Installation (1) de turbine à gaz et de turbine à vapeur suivant la revendication 1, dans laquelle un échangeur de chaleur (159) est monté dans le conduit (130) pour du gaz en amont du verrou (200) de gaz.

3. Installation (1) de turbine à gaz et de turbine à vapeur suivant la revendication 1 ou 2, **caractérisée en ce qu'**un saturateur (150) est monté dans le conduit (130) pour du gaz en amont du verrou (200) de gaz.

4. Installation (1) de turbine à gaz et de turbine à vapeur suivant la revendication 3, dans laquelle le saturateur (150) est monté en amont de l'échangeur de chaleur (159).

5. Installation (1) de turbine à gaz et de turbine à vapeur suivant l'une des revendications précédentes, dans laquelle le conduit (228) de balayage est constitué de manière unidirectionnelle.

6. Installation (1) de turbine à gaz et de turbine à vapeur suivant la revendication 5, dans laquelle le conduit (228) de balayage est raccordé à un stockage (220) intermédiaire.

7. Installation (1) de turbine à gaz et de turbine à vapeur suivant la revendication 6, dans laquelle le stockage (220) intermédiaire est raccordé à une installation (138) de fractionnement d'air par un conduit (210) d'entrée.

8. Installation (1) de turbine à gaz et de turbine à vapeur suivant la revendication 7, dans laquelle débouche dans le conduit (210) d'entrée un conduit (224) de réserve qui est raccordé, côté entrée, à un système (226) de remplissage d'urgence pour de l'azote (U-N₂, R-N₂), notamment pour de l'azote pur (R-N₂).

9. Procédé de balayage d'un système (129) de combustible d'une installation (1) de turbine à gaz et de turbine à vapeur suivant l'une des revendications 1 à 8, dans lequel on balaie le système (129) de combustible compris entre un verrou (200) de gaz et une chambre de combustion (6) dans la direction de la chambre de combustion (6) sans vapeur par un fluide (1) de balayage inerte.

10. Procédé suivant la revendication 9, dans lequel on envoie le fluide (1) de balayage en aval du verrou (200) de gaz entre le robinet (204) de fermeture de gaz et le robinet (208) de régulation.

11. Procédé suivant la revendication 9 ou 10, dans lequel on prélève l'azote (U-N₂, R-N₂) pour le balayage d'une installation (138) de fractionnement d'air.
